# EUROPEAN PATENT APPLICATION

(11) **EP 2 806 623 A1**
(43) Date of publication of application: **26.11.2014**
(21) Application number: 13169201.4
(22) Date of filing: 24.05.2013
(51) Int. Cl.: H04M 19/04

(54) **Method and electronic device for updating communication representations based on activity level**

(30) Priority: 23.05.2013 US 201313900961
(71) Applicant: BlackBerry Limited, Waterloo, ON N2K 0A7 (CA)
(72) Inventor: Hallerström Sjöstedt, Svante Magnus Ulfstand, 211 40 Malmö (SE); Eriksson, Marcus, 214 24 Malmö (SE); Gärdenfors, Dan Zacharias, 211 40 Malmö (SE)
(74) Representative: Brunner, John Michael Owen

(57) **Abstract**

An electronic device outputs on a display a plurality of communication representations. Each of the communication representations is associated with a different communication history between at least two electronic devices. The electronic device updates on the display at least one communication representation of the plurality of communication representations when an activity level associated with the at least one communication representation meets a threshold.

## Description

### Field

This disclosure relates to electronic devices, and more particularly, to a method and electronic device for updating communication representations based on activity level.

### Background

Electronic messaging provides for rapid communication between electronic devices. The amount of content communicated can be large relative to the amount of time spent by users in processing the content.

Known techniques for displaying electronic messages can lead to confusion or even error. For instance, an active conversation may move down a chronological list merely because more recent, but unrelated, messages have arrived. This can lead to users hunting for active conversations, which can waste time and waste the limited resources of a battery powered electronic devices and the related messaging servers.

Further, when a user is not aware that a conversation is highly active, the user may not respond quickly, which may cause additional messages to be sent by the remote correspondent to prompt the user to respond. This can waste network resources and clog communications systems with messages of little or no content.

### Brief Description of the Drawings

The drawings illustrate, by way of example only, embodiments of the present disclosure.

FIG. 1 is a diagram of a system according to an embodiment of the present disclosure.

FIG. 2 is a block diagram of an electronic device.

FIG. 3 is a block diagram of a server.

FIG. 4 is a front view of a mobile electronic device showing a communication history listing interface having communication history elements of different levels of activity.

FIGs. 5a - 5b are front views of the mobile electronic device showing a message reading interface according to different levels of activity.

FIG. 6 is a schematic diagram illustrating a method for determining a visual differentiator for a communication history.

FIGs. 7a - 7c are diagrams of data structures for messages, communication history activity levels, and visual differentiators.

FIG. 8 is a front view of a mobile electronic device showing a message composition interface according to a determined activity level.

FIG. 9 is a diagram of a data structure for tracking time delays in responding to messages for different correspondents.

FIG. 10 is a front view of the mobile electronic device showing a message reading interface during transition between conversations of different activity levels.

FIG. 11 is a schematic diagram showing transition between conversations in a message reading interface.

### Detailed Description

According to one aspect of the present disclosure, a method in an electronic device having a display includes outputting on the display a communication representation. The communication representation is associated with a communication history between at least two electronic devices. The method further includes updating on the display the communication representation when an activity level associated with the communication representation meets a threshold.

The updating can be performed irrespective of the positioning of the communication representation in a set order.

The threshold can be determined dynamically.

The updating can include modifying the visual appearance of the communication representation depending on the activity level associated with the communication history.

The method can further include outputting to the display at least first and second communication representations corresponding to communication histories of differing activity levels. The method can further include, in response to receiving user input to transition between the first and second communication representations, causing the display to change from the first communication representation to the second communication representation, wherein the visual appearance of the first and second communication representations differ according to the differing activity levels.

The method can further include determining the activity level for the communication history.

Determining the activity level can include increasing the activity level when determining that a most recent message in the communication history has been displayed in a message reading interface configured to display an entire message body, and decreasing the activity level when determining that the most recent message in the communication history has not been displayed in the message reading interface.

Determining the activity level can include increasing the activity level when determining that a new message is being composed at one or more of the at least two electronic devices, and decreasing the activity level when determining that a new message is not being composed at any of the at least two electronic devices.

Determining the activity level can include increasing the activity level when determining that a time period between successive communications in the communication history is less than a set time period, and decreasing the activity level when determining that the time period between successive communications in the communication history is not less than the set time period.

Determining the activity level can include increasing the activity level when determining that a time of a most recent sent or received message of the communication history meets a predetermined recency, and decreasing the activity level when determining that the time of the most recent sent or received message does not meet a predetermined recency.

According to another aspect of the present disclosure, an electronic device includes a communications interface configured to receive messages from a network, a display configured to display received messages, an input interface configured to receive input of messages to be sent, memory configured to store message data, and a processor coupled to the communications interface, the display, the input interface, and the memory. The processor is configured to output to the display a communication representation. The communication representation is associated with a communication history between at least two electronic devices. The processor is further configured to update on the display the communication representation when an activity level associated with the communication representation meets a threshold.

The processor can further be configured to update on the display the communication representation irrespective of the positioning of the communication representation in a set order.

The processor can further be configured to determine the threshold dynamically.

The processor can be configured to update on the display the communication representation by modifying the visual appearance of the communication representation depending on the activity level associated with the communication history.

The processor can further be configured to output to the display at least first and second communication representations corresponding to communication histories of differing activity levels. The processor can further be configured to, in response to receiving user input to transition between the first and second communication representations, cause the display to change from the first communication representation to the second communication representation, wherein the visual appearance of the first and second communication representations differ according to the differing activity levels.

The processor can further be configured to determine the activity level for the communication history.

The processor can be configured to determine the activity level by increasing the activity level when determining that a most recent message in the communication history has been displayed in a message reading interface configured to display an entire message body, and decreasing the activity level when determining that the most recent message in the communication history has not been displayed in the message reading interface.

The processor can be configured to determine the activity level by increasing the activity level when determining that a new message is being composed at one or more of the at least two electronic devices, and decreasing the activity level when determining that a new message is not being composed at any of the at least two electronic devices.

The processor can be configured to determine the activity level by increasing the activity level when determining that a time period between successive communications in the communication history is less than a set time period, and decreasing the activity level when determining that the time period between successive communications in the communication history is not less than the set time period.

The processor can be configured to determine the activity level by increasing the activity level when determining that a time of a most recent sent or received message of the communication history meets a predetermined recency, and decreasing the activity level when determining that the time of the most recent sent or received message does not meet a predetermined recency.

According to another aspect of the present disclosure, a non-transitory computer-readable medium includes at least a program that when executed by a processor configures the processor to output to a display a communication representation. The communication representation is associated with a communication history between at least two electronic devices. The program further configures the processor to update on the display the communication representation when an activity level associated with the communication representation meets a threshold.

The program can further configure the processor to update on the display the communication representation irrespective of the positioning of the communication representation in a set order.

The program can further configure the processor to determine the threshold dynamically.

The program can further configure the processor to update on the display the communication representation by modifying the visual appearance of the communication representation depending on the activity level associated with the communication history.

The program can further configure the processor to output to the display at least first and second communication representations corresponding to communication histories of differing activity levels. The program can further configure the processor to, in response to receiving user input to transition between the first and second communication representations, cause the display to change from the first communication representation to the second communication representation, wherein the visual appearance of the first and second communication representations differ according to the differing activity levels.

The program can further configure the processor to determine the activity level for the communication history.

The program can further configure the processor to determine the activity level by increasing the activity level when determining that a most recent message in the communication history has been displayed in a message reading interface configured to display an entire message body, and decreasing the activity level when determining that the most recent message in the communication history has not been displayed in the message reading interface.

The program can further configure the processor to determine the activity level by increasing the activity level when determining that a new message is being composed at one or more of the at least two electronic devices, and decreasing the activity level when determining that a new message is not being composed at any of the at least two electronic devices.

The program can further configure the processor to determine the activity level by increasing the activity level when determining that a time period between successive communications in the communication history is less than a set time period, and decreasing the activity level when determining that the time period between successive communications in the communication history is not less than the set time period.

The program can further configure the processor to determine the activity level by increasing the activity level when determining that a time of a most recent sent or received message of the communication history meets a predetermined recency, and decreasing the activity level when determining that the time of the most recent sent or received message does not meet a predetermined recency.

In any of the aspects above, a plurality of communication representations can include communication history shortcuts arranged at locations on the display according to the set order.

In any of the aspects above, the communication representation can be updated on the display when the activity level associated with the communication representation meets a satisfactory threshold that is greater than the threshold.

In any of the aspects above, the communication representation can be updated on the display when the activity level associated with the communication representation meets a satisfactory threshold that is less than the threshold.

In any of the aspects above, the communication representation can include a component of a message reading interface displaying at least a portion of the associated communication history.

In any of the aspects above, the communication representation can include a component of a message composition interface configured to enter a new message to the communication history.

In any of the aspects above, modifying the visual appearance can include selecting from a group comprising: colour, shading, brightness, animation, icon and character for the display of a communication representation at each activity level.

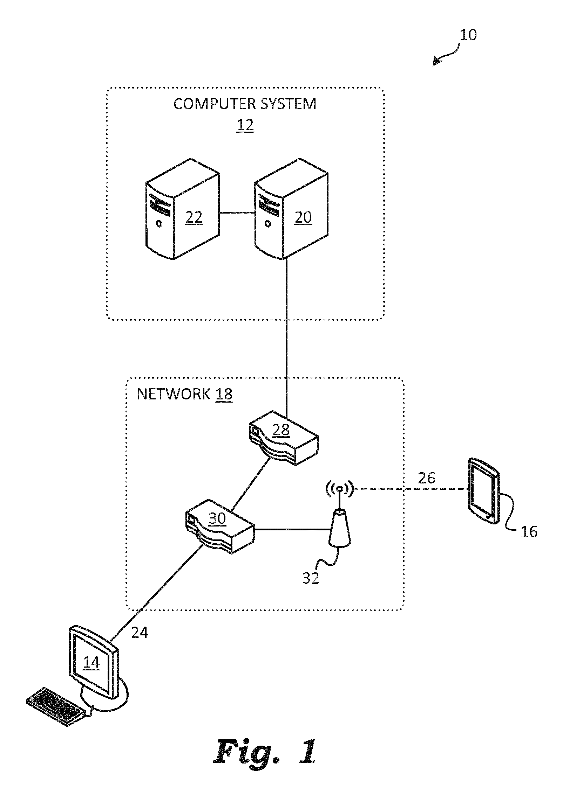

FIG. 1 shows a system 10 according to an embodiment of the present disclosure. The system 10 includes a computer system 12, a plurality of electronic devices 14, 16, and a network 18 that connects the plurality of electronic devices 14, 16 to each other and to the computer system 12. The electronic devices 14, 16 are remote to the computer system 12.

The computer system 12 can include one or more servers 20, 22. The servers 20, 22 can be computers or other specialized devices for processing messages sent among the plurality of electronic devices 14, 16. Each of the servers 20, 22 may be configured for a specific purpose within the computer system 12. Alternatively or additionally, servers 20, 22 may be configured for redundancy. For example, one of the servers 20, 22 may be configured to send and receive messages, such as email messages, among the electronic devices 14, 16, while another of the servers 20, 22 may be configured to store messaging account information, such as messaging addresses, identities, credentials, and similar.

The plurality of electronic devices 14, 16 can include devices such as desktop computers, laptop computers, tablet computers, mobile phones, smart phones, and the like. Some of the electronic devices 14 may be configured to be used in a stationary setting, while others of the electronic devices 16 may be mobile or portable. Accordingly, each of the plurality of electronic devices 14, 16 can be connected to the network 18 via one or more of a wired link 24 and a wireless link 26.

The network 18 can include network devices 28, 30, 32 such as routers, switches, servers, firewalls, wireless access points, cellular telephone base stations and towers, and the like. The network 18 may include one or more of a local-area network, a wide-area network, a peer-to-peer network, an Internet service provider's network, a cellular telephone network, an intranet, and the Internet.

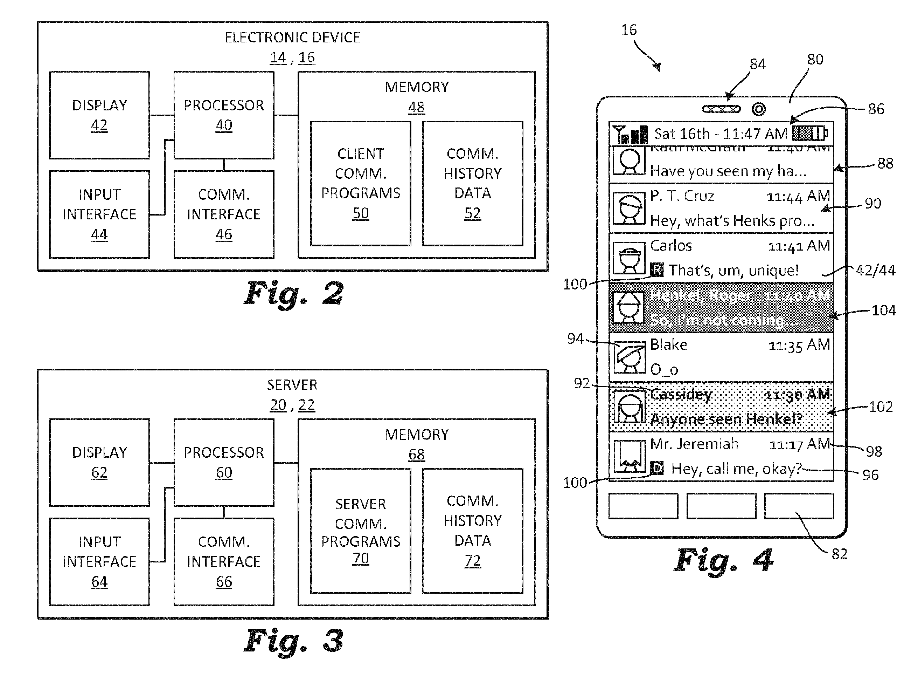

FIG. 2 shows an example of an electronic device 14, 16. The electronic device 14, 16 can include one or more processors 40, a display 42, an input interface 44, a communications interface 46, and memory 48. The display 42, input interface 44, communications interface 46, and memory 48 may be coupled to the processor 40 and to each other via a data bus or other data connection.

The processor 40 is configured to execute instructions originating from the memory 48 or the communications interface 46 to perform methods or processes described herein. The processor 40 can include one or more processing cores. Multiple interconnected processors can be provided as the processor 40.

The display 42 is a device capable of displaying visual output generated by the processor 40. The display 42 can include one or more devices such as a liquid crystal display (LCD), a light-emitting diode (LED) display, and the like.

The input interface 44 can include one or more devices such as a touch-sensitive element that is physically part of the display 42, a keypad or keyboard having physical keys, a trackpad or touchpad responsive to finger movement, a mouse, buttons, a microphone, and the like.

The communications interface 46 can include one or more communications adaptors suitable for the type of link or links 24, 26 (FIG. 1) used by the electronic device 14, 16 in communicating with the network 18 or in communicating directly with other electronic devices 14, 16. Such adaptors can include wired network adaptors (e.g., Ethernet) and wireless network adaptors (e.g., WiFi, 3G, LTE, Bluetooth, etc).

The memory 48 stores programs and data for use by the processor 40. The memory 48 can include volatile and non-volatile memory devices such as RAM, flash memory, ROM, hard drives, and like non-transitory computer-readable media.

The memory 48 stores a client messaging program 50 that allows the electronic device 14, 16 to communicate electronic messages, such as instant messages, with other electronic devices 14, 16. The client messaging program 50 includes instructions and data that configure the processor 40 to generate the interfaces, respond to input, and perform the methods and processes, as discussed herein.

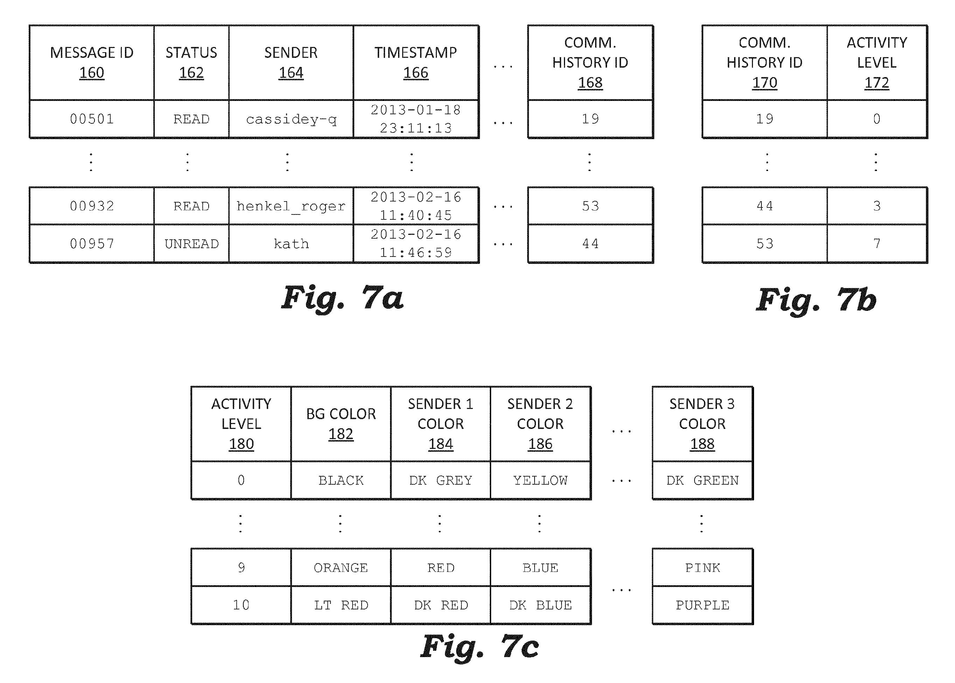

The memory 48 further stores communications history data 52 and other message data for one or more user addresses, such an instant messaging identity or email address, associated with one or more electronic messaging accounts accessible at the electronic device 14, 16. Other message data can include an encryption key and other data associated with the electronic messaging account. Communications histories 52 can be stored according to a data structure (FIG. 7a) and may include message content, message statuses (e.g., read, unread, unseen), and message relationships for displaying conversations or message threads.

FIG. 3 shows an example of a server 20, 22. The server 20, 22 can include one or more processors 60, a display 62, an input interface 64, a communications interface 66, and memory 68. The display 62, input interface 64, communications interface 66, and memory 68 may be coupled to the processor 60 and to each other via a data bus or other data connection.

The processor 60 is configured to execute instructions originating from the memory 68 or the communications interface 66 to perform methods or processes described herein. The processor 60 can include one or more processing cores. Multiple interconnected processors can be provided as the processor 60.

The display 62 is a device capable of displaying visual output generated by the processor 60. The display 62 can include one or more devices such as an LCD, an LED display, and the like.

The input interface 64 can include one or more devices such as a touch-sensitive element that is physically part of the display 62, a keypad or keyboard having physical keys, a trackpad or touchpad responsive to finger movement, a mouse, buttons, a microphone, and the like.

The communications interface 66 can include one or more communications adaptors suitable for communicating with the network 18 or with other servers 20, 22. Such adaptors can include wired network adaptors and wireless network adaptors.

The memory 68 stores programs and data for use by the processor 60. The memory 68 can include volatile and non-volatile memory devices such as RAM, flash memory, ROM, hard drives, and like non-transitory computer-readable media.

The memory 68 stores a server messaging program 70 that allows communication of electronic messages among the electronic devices 14, 16. The server messaging program 70 includes instructions and data that configure the processor 60 to process and send electronic messages and to perform the methods and processes discussed herein.

The memory 68 further stores communications history data 72 for the user addresses associated with the electronic messaging accounts accessible at the electronic device 14, 16. Data 72 can further include encryption keys, login credentials, and other data associated with the electronic messaging accounts. Data 72 can further store message content, message statuses (e.g., read, unread, unseen), and message relationships for message threads.

As shown in FIG. 4, the electronic device 16 can be a mobile or portable electronic device, and may be known as a mobile phone, smart phone, tablet computer, or the like.

In this embodiment, the electronic device 16 includes a housing 80 configured to hold the operational components of the electronic device 16. The electronic device 16 can further include physical buttons 82, which may form part of the input interface 44, and other components 84, such as a speaker, microphone, camera, and the like.

In this embodiment, the display 42 is a touch-screen, so the input interface 44 includes touch-sensitive elements of the display 42. The electronic device 16 may also include a physical keyboard, such as a full keyboard (e.g., QWERTY keyboard), that also forms part of the input interface 44.

The electronic device 16 is configured to display a status area 86 at the display 42. The status area 86 may show information relevant to the overall operation of the electronic device 16, such as network signal strength, date/time, battery charge level, and the like.

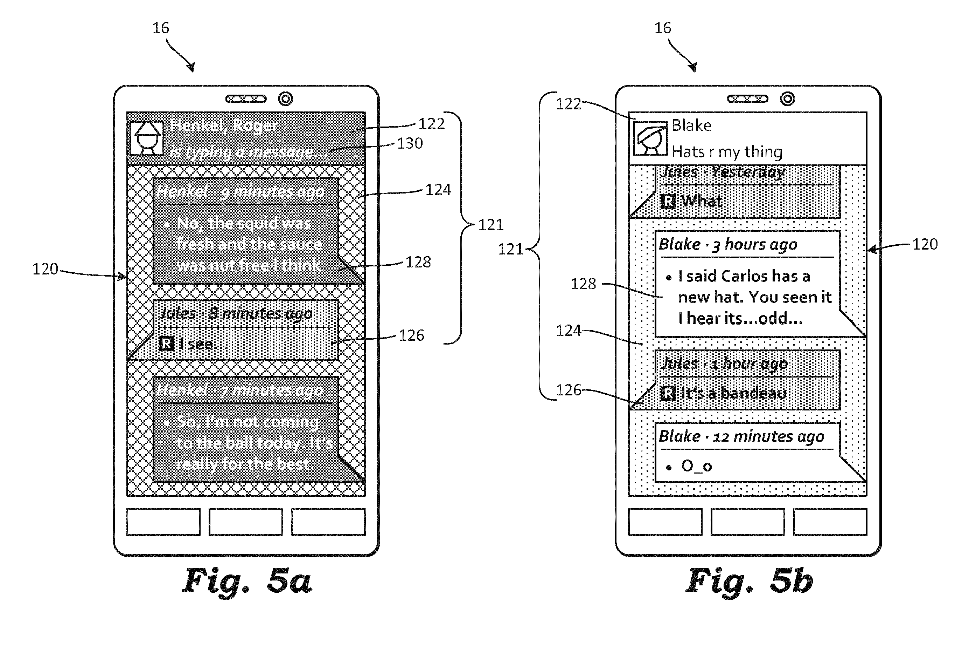

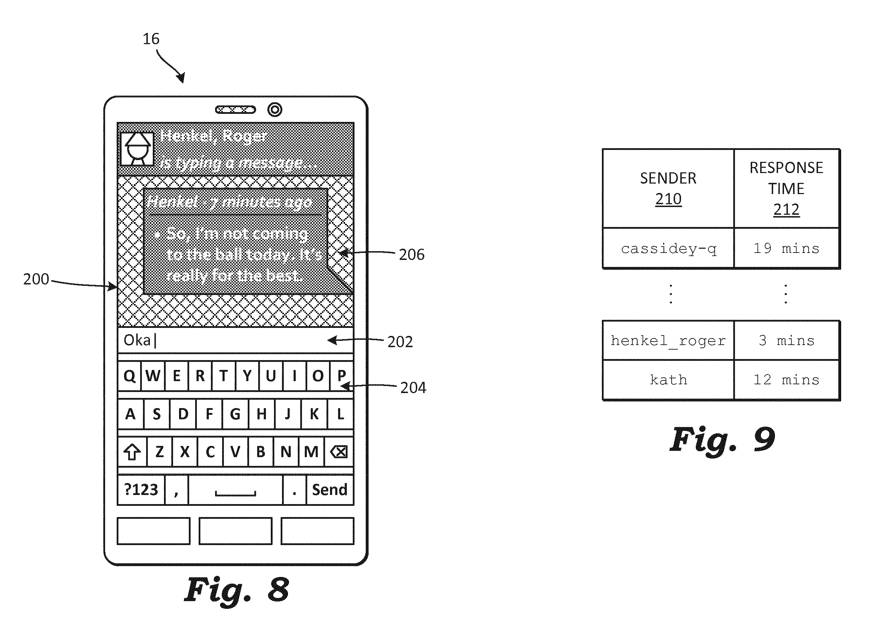

The electronic device 16 is further configured to display various user interfaces for messaging on the display 42. In this embodiment, a communication history listing interface 88 includes a plurality of communication history elements, such as communication history shortcuts 90. The input interface 44 is configured to receive selection of the communication history shortcuts and, in response, cause the selected communication history to be opened and shown in a message reading interface 120, as shown in FIGs. 5a and 5b. The input interface 44 is further configured to receive other commands, such as a command to compose a new message (and open the interface 200 of FIG. 8), delete a message or a communication history, and the like.

In various embodiments, messages can include communications made using various modes such as email, instant/chat messaging, telephone, video messaging, social media (e.g., Facebook posts, Twitter tweets, etc), and the like. Accordingly, communication histories can include a series of such communications presented in reverse-chronological order, chronological order, or another order (e.g., sorted by subject, sender, etc). In some embodiments, a given communications history is limited to messages of the same mode. In other embodiments, a given communications history can include messages of different modes related by, for example, a common correspondent, subject, etc.

Reverse-chronological ordering allows the user's attention to be readily and reliably drawn to the most recent received message, as the containing communication history shortcut 90 is moved to the top of the listing interface 88. Other sorting criteria have similar results, in that the location or change of location of a communication history shortcut 90 provides useful information about the underlying communication history to the user.

In the illustrated example, communications are made by instant messaging and the communication history shortcuts 90 identify different conversations. Accordingly, each communication history shortcut 90 includes a correspondent identifier 92, such as the name or alias of a remote correspondent, a correspondent picture 94, a snippet 96 of a most recent sent or received message, and a timestamp 98 of the most recent sent or received message. While the snippet 96 is not configured to display an entire message body, this may result for short messages. Further, concerning the status of messages sent from the device 16, the communication history shortcut 90 may include a message status indicator 100 configured to provide the status of the sent message, such as delivered to the recipient (e.g., "D"), read by the recipient (e.g., "R"), pending delivery (e.g., a clock or hourglass icon), and the like.

Thus, as can be seen, a plurality of communication history shortcuts 90 are displayed at locations arranged according to a set order, which in this embodiment is a one-dimensional listing. In other embodiments, the set order may include a list or other layout. The set order is structured in a manner that conveys information to the user of the device 16, and may be selected to have reverse-chronological ordering of communication history shortcuts 90 based on timestamps of most recent messages in the communication histories. Each of the communication history shortcuts 90 represents a different communication history between at least two electronic devices 16.

As will be discussed below, activity levels are determined for the communication histories. A communication history shortcut 90 that correspond to a more active conversation is visually distinguished, irrespective of the location of the communication history shortcut in the listing interface 88. So, while a communication history with a more recent message may appear at the top of the listing interface 88 by virtue of reverse-chronological ordering, a highly active conversation may have its communication history shortcut colored, highlighted, or otherwise visually distinguished. This can advantageously allow the user to keep track of important conversations even when such conversations experience temporary lulls among bursts of activity, which has been discovered to be a common communications habit when using mobile electronic devices. A further advantage is that important conversations can be tracked when the communication link between the correspondent devices 16 is temporarily broken, as can happen due to network errors, temporary loss of wireless reception, and in similar situations where a remote correspondent's device 16 may become temporarily unavailable.

In the example illustrated, a communication history shortcut 102 of an active conversation is visually distinguished by changing the background color of the element 102. An even more active conversation has its communication history shortcut 104 changed to another color. Color is an example of a visual differentiator that can be selected to represent differing levels of activity of the underlying conversations. A highly active conversation can have its communication history shortcut 104 shown with color, shading, contrast, animation, icon, character, or brightness/intensity that is more demanding of human attention than, say, the color, shading, contrast, animation, icon, character, or brightness/intensity selected for a less active communication history shortcut 102. Inactive conversations may have their communication history shortcuts provided with color, shading, contrast, animation, icon, character, or brightness/intensity that is still less demanding of human attention.

Human attention to color may be the result of many factors, such as psychology, culture, genetics, education, social status, and similar. The colors selected for different activity levels can thus be tested against people representative of the typical users of the device 16. Such colors may also be user-selectable. The end result is that communication history elements for conversations of different activity levels are visually distinguished in a manner that prompts appropriate user attention.

FIGs. 5a and 5b show a message reading interface 120, which in this example is an instant message conversation interface configured to display the entire message body of one or more past and present messages. Other examples of message reading interfaces 120 include email reading interfaces configured to display the entire body of an email message.

The message reading interface 120 includes a communication representation or representation 121, such as a correspondent indicator 122, which shows details about the correspondent, such as a name, status, and picture. The communication representation 121 can further include a background 124 over which message fields 126, 128, such as boxes or bubbles, are drawn. Sent message fields 126 contain messages sent from the device 16, while received message fields 128 contain messages received from a remote device 16. Message fields 126 may include the name of the user who sent the message, an absolute or relative timestamp of the message, as well as delivery or read receipt information (e.g., "D", "R", etc). The correspondent indicator 122 may further contain a composing indication 130 indicating that a message is being composed by the remote correspondent at the remote electronic device 16. The communication representation 121 can include more or fewer components than the components 122 - 130 described above.

FIG. 5a shows an example of a conversation of a relatively high level of activity, as suggested by the short durations between the timestamps. The correspondent indicator 122, message fields 126, 128, and background are colored according to the high level of activity. The message fields 126, 128 have different colors, so as to distinguish messages sent by different correspondents.

FIG. 5b an example of a conversation of a relatively low level of activity, as suggested by the longer durations between the timestamps. The correspondent indicator 122, message fields 126, 128, and background are colored according to the low level of activity. The message fields 126, 128 have different colors, so as to distinguish messages sent by different correspondents.

Thus, the user of the device 16 is provided with an intelligible, clear, and unambiguous visual differentiators for different activity levels of communication histories in the communication representation 121 of the message reading interface 120.

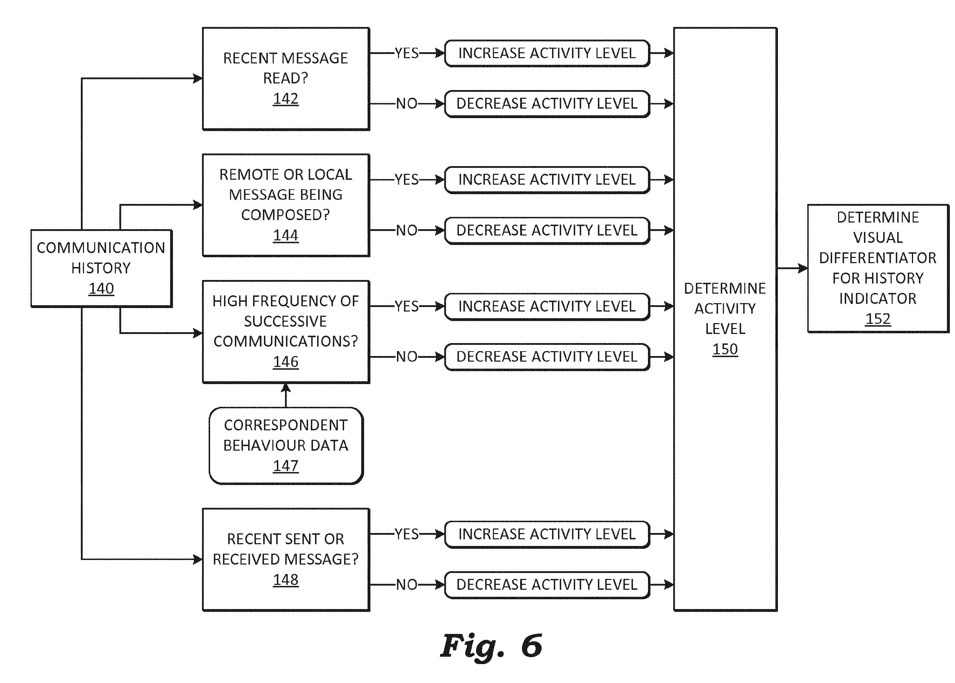

FIG. 6 shows a diagram of a method for determining a visual differentiator for a communication history. The method can be implemented in the client program 50 of the device 16 configured for communications of the relevant mode (e.g., email, instant messaging, or the like). Alternatively, the method can be implemented in a program accessible by different client programs 50 of the device 16, so as to accommodate a communication history having elements of various different modes (e.g., email and instant messages).

The method can be performed at a local electronic device 16 taking into account events at one or more remote electronic devices 16 with which messages are exchanged in a communication history. The remote devices 16 can themselves be considered local devices and can each similarly perform the method.

At 140, a communication history is selected and data for relevant communications is obtained. Such data may be as shown in FIG. 7.

At 142 - 148, one or more different activity indicators can be referenced to determine the activity level for the communication history. The activity level can be stored in variable (e.g., an integer) that is set to an initial value (e.g., 0).

In some embodiments, the activity level is at least partially based on messages being read, or at least displayed in an interface capable of providing the full message content to the viewer. Read messages indicate more activity than unread messages. Thus, at 142, the activity level can be increased when it is determined that a most recent message in the communication history has been displayed in, for example, the message reading interface 120 (FIG. 5). Conversely, the activity level can be decreased when it is determined that the most recent message in the communication history has not been displayed in the message reading interface 120. The determination that the message has been read can be performed for messages read at local and remote devices 16. That is, a local device 16 performing the method can determine that a received message has been read when the message reading interface 120 is invoked at the local device 16. In addition or alternatively, the local device 16 can determine that a sent message was read at the remote device when receiving a read receipt from the remote device indicating that the message was displayed in the message reading interface 120 of the remote device 16.

In some embodiments, the activity level is at least partially based on detecting that a message is being composed by a remote correspondent at a remote electronic device 16 or by the user of the local electronic device 16, the local device 16 being the device performing this method. The client program 50 can be configured to send indications of typing or other message composition activities to a messaging server 20, 22, which forwards such indications to corresponding devices 16 to display composition indications 130 (FIG. 5). A message being composed remotely indicates more activity than when no new messages are being composed. Similarly, a message being composed locally, as detected for example by key presses in a message composition interface, indicates more activity. Thus, at 144, the activity level can be increased when it is determined that a new message is being composed at a remote electronic device 16, or when it is determined that a new message is being composed at the local electronic device 16. Conversely, the activity level can be decreased when it is determined that a new message is not being composed at any of the electronic devices 16 contributing to the communication history. New messages can be composed using, for example, a message composition interface as shown in FIG. 8.

In some embodiments, the activity level is at least partially based on the frequency of message communication. Sent and received messages are time-stamped with a time of sending or receipt. Timestamps of at least two successive messages can be analyzed to calculate a frequency of message communication, with higher frequencies indicating increased activity. When two successive messages are considered, the frequency is an instantaneous frequency. When more than two successive messages are considered, the frequency is an average frequency. Thus, at 146, the activity level can be increased when it is determined that a time period between successive communications in the communication history is less than a set time period (e.g., 5 minutes). Conversely, the activity level can be decreased when it is determined that the time period between successive communications in the communication history is not less than the set time period. Note that comparing periods is equivalent to comparing a frequency (e.g., 8 messages per hour) to a predetermined frequency.

The set time period for frequency-based activity level determination can be linked to correspondent-specific data 147 indicative of past behaviour in responding to messages. As shown in FIG. 9, a data structure can be stored at the device 16 for tracking time delays in responding to messages. Such time delays can be measured and averaged to store set time periods 212 of response for various correspondents 210. For example, the timestamp of a message that arrives at the electronic device 16 is compared to the timestamp of the immediately previous message sent to the same correspondent to calculate a time delay for the correspondent in responding to messages. The stored set time period 212 is then updated to reflect the calculated time delay. Updating can include performing a weighted averaging of the stored set time period 212 with the newly calculated time delay (e.g., 90% of stored set time period 212 plus 10% of newly calculated time delay), so that the stored set time period 212 gradually changes to reflect any changing response behaviour for the correspondent. The specific factors (e.g., 90% and 10%) for this kind of running average calculation can be selected based on measured response times for a large set of users. Other kinds of calculations can additionally or alternatively be applied. Then, when determining the activity level based on frequency of response, at 146, the specific stored set time period 212 for the correspondent can be taken into account. Thus, for example, a remote correspondent who typically takes 10 minutes on average to respond to messages will trigger an increase in activity level for a conversation when responding within 7 minutes, whereas a remote correspondent who typically takes 3 minutes on average to respond would not trigger such an increase if responding within 7 minutes. If, over the course of several messages, the correspondent who typically takes 10 minutes to respond begins to take about 5 minutes to respond, then the stored set time period 212 will be updated to gradually tend towards 5 minutes when a running average calculation is used.

Time periods between successive sent messages originating at the local device 16 can also be compared, in the manner discussed above, to a set time period 212 for the user account at the local device 16. The local user may respond more quickly to a conversation with a first remote correspondent than to a conversation with a second remote correspondent, and this can be taken into account by comparing the local user's response frequency to an average frequency for the local user.

In some embodiments, activity level changes are determined for each of the remote correspondents and the local user based on response frequency, as described above, and the resulting values are averaged to arrive at an average activity level change for the communication history. Thus, if one correspondent is responding at very high frequency while another is responding at very low frequency, the conversation history is assigned an activity level somewhere in between.

In other embodiments, the data structure of FIG. 9 stores an aggregate correspondent identifier at 210 for all participants in a conversation, and timestamps between successive messages regardless of sender are compared to a set time period stored at 212. That is, the identifiers of all correspondents in a communication history are linked to a single set time period, and message frequency is measured based on successive messages entered into the communication history. This can advantageously simplify accounting for different conversation dynamics for different groups of correspondents.

In other embodiments, the correspondent-specific data 147 and data structure of FIG. 9 can be configured to receive values via user input. Thus, a user of the electronic device 16 can enter set time periods 212 for remote correspondents, where such an entered set time period 212 would override any calculated set time period.

The set time period can be set before performance of the method, and may be fixed and unchangeable or may be set to a default or initial value, after which calculation or user entry is referenced to change the set time period.

In some embodiments, the activity level is at least partially based on the timestamp of the most recent sent or received message, as compared to a current time maintained at the receiving electronic device 16. A more recent timestamp indicates more activity. Thus, at 148, the activity level is increased when it is determined that a time of a most recent sent or received message of the communication history meets a predetermined recency. Conversely, the activity level is decreased when it is determined that the time of the most recent sent or received message does not meet a predetermined recency. Examples of predetermined recency include: within the past 10 minutes, within the past hour, etc.

Then, at 150, the activity level is determined for the communication history. The effects on the activity level by the one or more activity indicators 142 - 148 are tallied. When more than one activity indicator 142 - 148 is used, their outputs may be configured or weighted according to a predetermined determination of their relative contributions to total activity. For example, reading messages, at 142, may increase the activity level by 3, whereas determining that a remote message is being composed, at 144, may increase the activity level by 5.

In some embodiments, a lookup table is used to determine activity level based on the activity indicators 142 - 148 being used as lookup indexes. That is, a table of determined activity levels can be established for each combination of values for the activity indicators 142 - 148.

At 152, the determined activity level is compared to at least one threshold level, and a visual differentiator is selected when the determined activity level of the communication history meets or exceeds a threshold level. The visual differentiator visually distinguishes the communication history element and can include coloring the communication history element (e.g., element 102 of FIG. 4) differently from a communication history element of a communication history whose activity level does not meet or exceed the threshold level. For example, the threshold level may be set to 7, so that the above example activity level of 8 (i.e., 3 + 5) triggers the visual differentiator. More than one threshold level and resulting visual differentiator may be configured, as shown in FIG. 7c. Thus, the user of the device 16 can readily and unambiguously determine active communications from more recent, yet relatively inactive, communications. This can lead to increased communications efficiency by way of fewer re-sent messages or fewer status update request messages (i.e., "Are you there?"), which can save network bandwidth and resources of the electronic device 16.

The process 140 - 152 is repeated, so that visual differentiators are continually updated to immediately or nearly immediately reflect changes in actively level. Accordingly, the process 140 - 152 can be triggered for a given communication history by a new message being sent or received for that communication history. Alternatively, the process 140 - 152 can be triggered based on time (e.g., periodically). Selection of a particular communication history, at 140, can thus be based on a new message being added to the history or can be based on a schedule or other trigger.

It should be understood from the above that the process 140 - 152 applies to communication histories with any number of correspondents. In some embodiments, determining the activity level at 150 can be configured to blend or average increases or decreases in activity level based on the number of correspondents, so that an activity level of the conversation as a whole is reflected by the visual differentiators. For example, activity increases/decrease output at 142 - 148 for each correspondent can be tallied and then the tally can be compared to a total that is dependent on the number of correspondents (e.g., a total of 30 for three correspondents). Alternatively, increases/decrease output at 142 - 148 for all correspondents are averaged with the average then compared to a fixed total (e.g., 10). In other embodiments, a communication history for a group of three or more correspondents can be considered highly active even if only two correspondents are highly active, and thus, determining the activity level at 150 can be configured to operate substantially the same irrespective of the number of correspondents.

FIG. 7a shows a schematic diagram of a data structure for messages. The data structure may be used to store communications histories 52 (FIG. 2). The data structure includes fields for message identifier 160, message status 162, message sender 164, timestamp 166, and communication history identifier 168. Each row stores data for one message. The message identifier 160 is a unique number or other identifier for a message. The status 162 stores message statuses, such as read, unread, unseen, and the like, which change in response to actions taken by the user. For example, the status of a message can be configured to change from unread to read after displaying the message reading interface 120 (FIG. 5) containing the message. The sender field 164 stores an identifier of the sender of the message, and may identify a messaging account set up on the device 16 or a messaging account set up on a remote device 16. The timestamp 166 stores a date-time of when the message was sent by or received at the electronic device 16. The communication history identifier 168 stores a unique identifier of a conversation or thread to which the message belongs. The data structure may be configured to store other data, such as message content, or such data may be stored in one or more related data structures.

FIG. 7b shows a schematic diagram of a data structure for storing activity levels. The data structure includes fields for communication history identifier 170 and determined activity level 172. The communication history identifier 170 is of the same data type as the communication history identifier 168 of the message data, and as such, the communication history identifiers 168, 170 may be used as keys to link the two data structures, so that the same activity level can be assigned to all messages of a communication history. The determined activity level field 172 stores the activity level for the identified communication history, as determined by the method discussed above with respect to FIG. 6.

FIG. 7c shows a schematic diagram of a data structure for storing data for different activity levels to provide different visual differentiators that visually distinguish communications histories based on activity level. The data structure can include fields for threshold activity level 180, background color 182, and sender message colors 184 - 188. The threshold activity level 180 is of the same data type as the activity level 172 of the activity level data structure, and as such, the activity levels 180, 172 may be used as keys to link the two data structures, so that the visual differentiators can be matched to various communication histories and messages thereof. The background color 182 and sender message colors 184 - 188 are examples of visual differentiators and can store information such as color indicators (e.g., hex triplets, color names). Other fields for other visual differentiators, such as contrast, shading, animation, icon, character, brightness, and intensity, can also be provided. Each of the rows of the data structure can represent a different palette from which a particular palette is selected according to activity level. The background color 182 and sender message colors 184 - 188 can be referenced by the client program 50 when repainting or refreshing the communication history elements, such as the communication history shortcuts 90 (FIG.4) and the components of the message reading interface 120 (FIG. 5) and message composition interface 200 (FIG. 8), and particularly, the correspondent indicator 122, the background 124, and the message fields 126, 128 thereof. The background color 182 and sender message colors 184 - 188 can also be referenced by the client program 50 when repainting or refreshing the message composition interface.

FIG. 8 shows a message composition interface 200 for the electronic device 16. In this embodiment, the message composition interface includes a message entry field 202 and a virtual keyboard 204 configured to enter and send a new message to the remote correspondent such that the new message becomes part of the communication history. Also included is a portion 206 of the message reading interface 120. The message composition interface 200 can be visually distinguished based on activity level, as discussed above. In the embodiment illustrated, the portion 206 of the message reading interface is visually distinguished based on activity level, but the message entry field 202 and a virtual keyboard 204 are not. In other embodiments, one or more of the message entry field 202 and a virtual keyboard 204 may be visually distinguished and thus may have color, shading, animation, icon, character, contrast, or brightness/intensity controlled by one or more fields in the data structure of FIG. 7c. This can advantageously allow a user discern the activity level of the conversation while composing a message, which may prompt the user to respond in a manner differently for different activity levels.

Visual differentiators 182 - 188 can be provided to user interface elements 90, 122 - 128, 202, 204 of the interfaces 88, 120, 200 by way of setting properties of the user interface elements, assigning values to public variables of instances of user interface element classes, assigning values to global variables of the client program, and like techniques.

Visual differentiators and visually distinguishing as discussed herein includes setting one or more of the color, shading, animation, icon, character, contrast, and brightness/intensity of a user interface element based on activity level. It should be understood that this does not require the entire user interface element to have such color, shading, animation, icon, character, contrast, or brightness/intensity. In some embodiments, a substantial portion, such as 30 to 100%, of a user interface element has its color, shading, animation, icon, character, contrast, or brightness/intensity controlled based on activity level. The substantial portion can be selected based on a number of factors, such as the other information conveyed by the user interface element, as well as the interface or context in which the user interface element is displayed. The substantial portion can be selected to be clearly and unambiguously noticeable by a typical user and to clearly convey that the underlying message history is undergoing a particular level of activity.

FIG. 9 shows a data structure for tracking time delays in responding to messages for different correspondents, as has been discussed above with respect to FIG. 6 and the correspondent behaviour data 147. The data structure has a correspondent or sender field 210 with the same data type as the sender field 164 of the message data structure of FIG. 7a. As such, the sender fields 210, 164 may be used as keys to link the two data structures, so that set time periods of response 212 can be matched to message timestamps 168 for updating the set time periods 212 using a running average or other calculation methodology based on the timestamps 168.

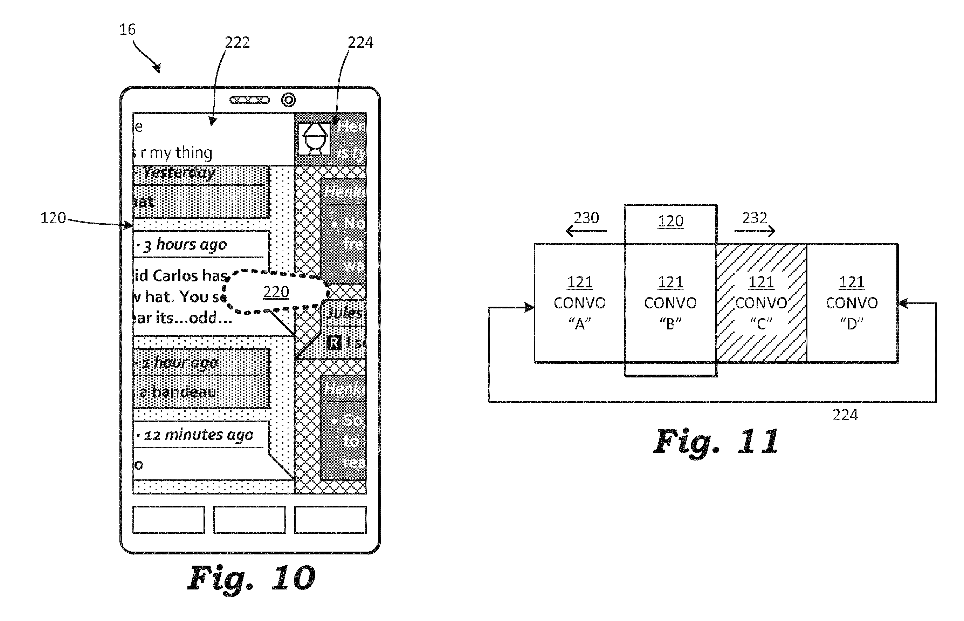

FIG. 10 shows the message reading interface 120 configured to navigate between communication histories. Such navigation can be configured to operate according to a set order, such as a chronological order, such that a first user input (e.g., a finger swipe left on the touch-sensitive display 42) transitions to a communication history having a next most recent message. A second user input (e.g., a swipe rightwards) transitions to older conversations. The transition can include a sliding effect or other visual effect, so that portions of two communication representations 121 (FIG. 5) belonging to different conversations are visible in the message reading interface 120 at the same time. Both of such communication representations are visually distinguished based on respective activity level and irrespective of a location of the communication representation in the set order, as described above. Hence, two differently distinguished communication representations can be visible at the same time when receiving user input to transition between respective communication histories within the message reading interface 120.

As shown in the illustrated example, a swipe left input 220 causes a communication representation 222 of a relatively low-activity conversation to transition out of the interface 120, while at the same time a communication representation 224 of a higher activity conversation transitions into the interface 120. This behaviour is useful for a user to swipe between conversations easily. Such behaviour may also be configured to permit the user to peek into the next conversation without completing the transition to the next conversation. It is advantageous to show activity level as visually distinguished in conjunction with this behavior, so as to provide the user with activity-level information that may not be readily apparent from timestamps or other information within the conversations. Further, the message reading interface 120 may be a point of entry for the messaging client program 50, so a user may not be able to first assess activity level from another interface, such as the listing interface 88 (FIG. 4). Instead, the message reading interface 120 can advantageously give the user immediate and unambiguous activity level information, upon entry to the program 50 or when transitioning between conversations.

FIG. 11 is a schematic diagram that illustrates the above-described transition behaviour. Communication representations 121 for various conversations (e.g., "A" - "D") may be arranged according to a set order, such as a chronological order based on timestamp of most recent message. Conversation "A" may be the most recent conversation, whereas conversation "D" may be the oldest. Communication representations 121 for the conversations include such components described with respect to FIG. 5, such as a correspondent indicator 122, background 124, and message fields 126, 128, which can be colored or otherwise visually distinguished based on activity level, as discussed herein. The message reading interface 120 is configured to received input 230, 232 (e.g., swipes, button presses, etc) to transition between communication histories associated with the communication representations 121. Such transitioning may be looped, as indicated at 224, so that oldest and newest conversations are transitioned between. Thus, a highly active communication history (e.g., conversation "C") is indicated as such to the user irrespective of its position in the set order of communication representations 121. Further, although only one or portions of two communication representations 121 are visible at the same time in the message reading interface 120, the user can still be provided with a clear indication of conversation activity level.

As can be seen from the above, clear and unambiguous assessment of communications histories by activity level can be achieved. This can result in greater efficiency in communication. Network resources can be saved by reducing messages that merely request a remote correspondent to reply. Mobile device resources can also be saved, as fewer communications reduce the draw of battery power and the space taken up in memory. Additionally, the user experience is improved due to a user being able to readily pick out active conversations or threads from a listing or other pattern, particularly after recent messages have bumped active threads down the listing.

While the foregoing provides certain non-limiting example embodiments, it should be understood that combinations, subsets, and variations of the foregoing are contemplated. The monopoly sought is defined by the claims.

## Claims

1. A method, in an electronic device having a display, comprising:
outputting on the display a communication representation, the communication representation associated with a communication history between at least two electronic devices; and
updating on the display the communication representation when an activity level associated with the communication representation meets a threshold.

2. The method of claim 1, wherein a plurality of communication representations comprises communication history shortcuts arranged at locations on the display according to a set order, and the updating is performed irrespective of the positioning of the communication representation in the set order.

3. The method of claim 1 or 2, wherein the updating comprises modifying the visual appearance of the communication representation depending on the activity level associated with the communication history.

4. The method of claim 3, wherein modifying the visual appearance comprises selecting from a group comprising: colour, shading, brightness, animation, icon and character for the display of a communication representation at each activity level.

5. The method of claim 3 or 4, wherein the communication representation comprises a component of a message reading interface displaying at least a portion of the associated communication history, the method further comprising outputting to the display at least first and second communication representations corresponding to communication histories of differing activity levels, wherein in response to receiving user input to transition between the first and second communication representations, causing the display to change from the first communication representation to the second communication representation, wherein the visual appearance of the first and second communication representations differ according to the differing activity levels.

6. The method of any one of claims 1 to 5, further comprising determining the activity level for the communication history.

7. The method of claim 6, wherein determining the activity level comprises one or more of:
increasing the activity level when determining that a most recent message in the communication history has been displayed in a message reading interface configured to display an entire message body;
decreasing the activity level when determining that the most recent message in the communication history has not been displayed in the message reading interface;
increasing the activity level when determining that a new message is being composed at one or more of the at least two electronic devices;
decreasing the activity level when determining that a new message is not being composed at any of the at least two electronic devices;
increasing the activity level when determining that a time period between successive communications in the communication history is less than a set time period;
decreasing the activity level when determining that the time period between successive communications in the communication history is not less than the set time period;
increasing the activity level when determining that a time of a most recent sent or received message of the communication history meets a predetermined recency; and
decreasing the activity level when determining that the time of the most recent sent or received message does not meet a predetermined recency.

8. A non-transitory computer-readable medium comprising at least a program that when executed by a processor configures the processor to perform the method of any one of claims 1 to 7.

9. An electronic device comprising:
a communications interface configured to receive messages from a network;
a display configured to display received messages;
an input interface configured to receive input of messages to be sent;
memory configured to store message data;
a processor coupled to the communications interface, the display, the input interface, and the memory, the processor configured to:
output to the display a communication representation, the communication representation associated with a communication history between at least two electronic devices; and
update on the display the communication representation when an activity level associated with the communication representation meets a threshold.

10. The device of claim 9, wherein a plurality of communication representations comprises communication history shortcuts arranged at locations on the display according to a set order, and the processor is configured to update on the display the communication representation irrespective of the positioning of the communication representation in the set order.

11. The device of claim 9 or 10, wherein the processor is configured to update on the display the communication representation by modifying the visual appearance of the communication representation depending on the activity level associated with the communication history.

12. The device of claim 11, wherein modifying the visual appearance comprises selecting from a group comprising: colour, shading, brightness, animation, icon and character for the display of a communication representation at each activity level.

13. The device of claim 11 or 12, wherein the communication representation comprises a component of a message reading interface displaying at least a portion of the associated communication history, wherein the processor is further configured to output to the display at least first and second communication representations corresponding to communication histories of differing activity levels, and wherein the processor is further configured to, in response to receiving user input to transition between the first and second communication representations, cause the display to change from the first communication representation to the second communication representation, wherein the visual appearance of the first and second communication representations differ according to the differing activity levels.

14. The device of any one of claims 9 to 13, wherein the processor is further configured to determine the activity level for the communication history.

15. The device of claim 14, wherein the processor is configured to determine the activity level by one or more of:
increasing the activity level when determining that a most recent message in the communication history has been displayed in a message reading interface configured to display an entire message body;
decreasing the activity level when determining that the most recent message in the communication history has not been displayed in the message reading interface;
increasing the activity level when determining that a new message is being composed at one or more of the at least two electronic devices;
decreasing the activity level when determining that a new message is not being composed at any of the at least two electronic devices;
increasing the activity level when determining that a time period between successive communications in the communication history is less than a set time period;
decreasing the activity level when determining that the time period between successive communications in the communication history is not less than the set time period;
increasing the activity level when determining that a time of a most recent sent or received message of the communication history meets a predetermined recency; and
decreasing the activity level when determining that the time of the most recent sent or received message does not meet a predetermined recency.
